(19) Europäisches Patentamt
European Patent Office
Office européen des brevets

(11) Publication number: **0 216 376 B1**

(12) # EUROPEAN PATENT SPECIFICATION

(45) Date of publication of patent specification: **07.08.91**

(51) Int. Cl.[5]: **C08G 77/32**, C08G 77/08

(21) Application number: **86113169.6**

(60) Publication number of the earlier application in accordance with Art.76 EPC: **0 108 208**

(22) Date of filing: **27.08.83**

(54) **Process for making solventless release diorganopolysiloxane composition.**

(30) Priority: **10.09.82 US 416576**

(43) Date of publication of application:
**01.04.87 Bulletin 87/14**

(45) Publication of the grant of the patent:
**07.08.91 Bulletin 91/32**

(84) Designated Contracting States:
**AT BE DE FR GB IT NL**

(56) References cited:
**DE-A- 2 737 698**
**DE-A- 2 800 590**
**GB-A- 2 052 539**
**US-A- 3 978 104**

(73) Proprietor: **GENERAL ELECTRIC COMPANY**
**1 River Road**
**Schenectady New York 12305(US)**

(72) Inventor: **Dallavia, Anthony James, Jr.**
**3932 Sentry Walk**
**Marietta Georgia 30067(US)**

(74) Representative: **Sieb, Rolf, Dr. et al**
**General Electric - Deutschland Patentabteilung Praunheimer Landstrasse 50**
**W-6000 Frankfurt/Main(DE)**

**EP 0 216 376 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a process for making a one-component solventless release composition.

In GB-A-2 052 539 there is described a process for the continuous making of silanol terminated diorganopolysiloxanes by a base-catalyzed polymerisation of cyclic polysiloxanes and subsequent neutralization of the basic catalyst.

Silicone compositions have long been used as release coatings, which are useful in many applications whenever it is necessary to provide a surface or material which is relatively nonadherent to other materials which would normally adhere thereto. Silicone release compositions are widely used as coatings which release pressuresensitive adhesives for labels, decorative laminates, transfer tapes, etc. Silicone release coatings on paper, polyethylene, Mylar® , and other such substrates are also useful to provide non-stick surfaces for food handling and industrial packaging applications.

Silicone compositions previously developed as release coatings have included solutions in organic solvents, water dispersed emulsions and solvent-free ("100 % solids") silicone fluids. The solventless silicones are increasingly preferred for release applications because of the energy inefficient evaporation steps, solvent recovery and costly pollution abatement equipment associated with use of the solvent- and waterborne systems.

Solventless silicone release compositions, such as those taught by, U.S.-A-4,256,870, are typically two-part systems: One part is a mixture of a vinyl-containing linear diorganopolysiloxane, a precious metal catalyst and an inhibitor. The other part is a ≡SiH-containing crosslinker, such as a polymethylhydrogensiloxane fluid. These parts may be combined in a coating bath, applied to a substrate and cured to an adhesive coating by a thermally-accelerated addition cure reaction illustrated as follows:

$$\text{(I)}\quad \equiv Si-CH=CH_2 + HSi\equiv \xrightarrow[\Delta]{\text{catalyst}} \equiv SiCH_2CH_2Si\equiv$$

Cured release coatings using 100% solids silicone compositions exhibit exceptionally low, or "premium", release, i.e., very little force is required to separate most adhesives from the silicone-treated surface. However, most commercial applications demand higher (or "tighter") release from common pressure-sensitive adhesives, and so additives, called "controlled-release additives or "CRAs" are added to low-release compositions to raise their release.

Branched silicone resins, such as vinyl-MQ silicone resins are typically employed as release-increasing agents in CRAs. Conventional CRA formulations, such as those described by, U.S.-A-4,123,664 and, U.S.-A-3,527,659 contain up to 40-45% by weight vinyl-MQ resin (described in more detail infra) dissolved in a vinyl-functional diorganopolysiloxane, plus a catalyst and inhibitor.

Although they currently enjoy widespread use, conventional solventless CRAs have major disadvantages resulting from their high cost and processing limitations. The vinyl-MQ resins cannot be incorporated into vinyl-functional polysiloxane fluids in amounts greater than about 40-45% by weight without exceeding a workable application viscosity: At such levels the resulting compositions have viscosities >5000 mPa.s, 10 times the preferred viscosity for rotogravure application to papers or films. See e.g. U.S.-A-4,216,252. Consequently, the MQ resin content of CRAs is held down, but then large amounts of these expensive materials are added to low release solutions to bring about a higher release. This necessity of using high levels of costly additives in conventional solventless controlled release compositions often makes their use prohibitively expensive, in spite of the energy costs and pollution abatement costs their use avoids.

Accordingly, it is an object of the present invention to provide a process for making a one-component solventless release composition.

It is a further object of the present invention to provide a solvent-free silicone release coating composition providing intermediate release (as opposed to premium release).

It is a further object of the present invention to provide solventless controlled release compositions particularly well suited for paper release applications.

These objects are accomplished herein by the process according to claim 1.

The process of the present invention results in solventless silanol-functional release compositions which have been stabilized against premature condensation of the silanol functional groups (present in amounts of about 2-5% by weight in MQ resins). in the presence of the SiH-containing crosslinker by neutralizing the silanol components in their preparation with tris(2-chloroethyl)phosphite rather than phosphoric acid. Such compositions will have a longer shelf life, for reasons to be discussed in more detail hereinafter. According

to the invention the used silanol-functional diorganopolysiloxanes are prepared by KOH-catalyzed equilibration of cyclic polysiloxane monomers and water, where the catalyst is neutralized by the introduction of tris-(2-chloroethyl)phosphite so as not to produce any neutralization salts which would catalyze a condensation curb (see reaction II and discussion, infra).

Silanol-functional polysiloxanes which will cure in the presence of SiH-containing crosslinkers and condensation catalyst to form release coatings are conveniently prepared by base-catalyzed equilibration of cyclic polysiloxane monomers, such as octamethylcyclotetrasiloxane. The base, e.g. KOH, is commonly neutralized with phosphoric acid or silylphosphate to permit stripping the silanol products of light ends; but this mode of neutralization generates acid salts (i.e, acid phosphates) which catalyze condensation of the SiOH groups with the SiH groups of the SiH-functional polysiloxane fluids used as crosslinkers in silanol release compositions. In the presence of the acid salts, therefore, a solvent-free blend of silanol and SiH-containing fluids (and silanol MQ resins) quickly crosslinks to a gel and liberates hydrogen, as in the following reaction (II):

$$\text{(II)}\quad \equiv SiOH + HSi\equiv \xrightarrow[\Delta]{\text{catalyst}} \equiv SiOSi\equiv + H_2\uparrow$$

Producing silanol fluids by acid catalyzed processes avoids the formation of acid salts but has proved difficult to adapt to large scale operations.

It has been discovered herein, however, that low-to-medium viscosity devolatilized silanol fluids are stable in the presence of SiH-containing crosslinkers if they are neutralized with tris(2-chloroethyl)phosphite rather than by phosphoric acid. Thus in the controlled release compositions of the present invention which are based on silanol-functional diorganopolysiloxane fluids, increased storage stability is achieved by neutralizing the basic hydrolysis catalyst with tris(2-chloroethyl)phosphite.

In order that those skilled in the art might be better able to practice the present invention, the following example is given by way of illustration and not by way of limitation.

## EXAMPLE

In order to demonstrate the neutralization of the KOH-catalyzed preparation of silanol-functional materials, the following samples were prepared:

### Sample A

3500 parts by weight of dimethyl cyclic tetramer plus 0.20 parts by weight finely-ground KOH were placed in a 5 liter flask and heated to 150-155 °C for 90 minutes. The liquid then began to rapidly build in viscosity and 10 parts by weight of water were added. Equilibration was continued for 3 more hours at 150-155 °C, resulting in a 1600 mPa.s viscosity fluid which measured 34.7 ppm KOH by titre. The hot equilibrate was treated with 0.18 parts by weight of tris(2-chloroethyl)phosphite and the mixture held at 150 °C for 30 minutes. Prior to stripping, the tris(2-chloroethyl)phosphite treated polymer titred slightly basic (<3 ppm KOH). Stripping the silanol fluid under full vacuum 1330 Pa corresponding to about 10 mm Hg pressure) at 160-180 °C for two hours afforded 2700 parts by weight of a 2850 mPa.s viscosity polymer. Processing was completed by adding 89 parts by weight of a 30 mPa.s viscosity methylhydrogen crosslinker, stirring until uniform, and filtering. The product (Sample A) was a water-white 100% solids silicone blend, 2325 mPa.s viscosity, containing 97% silanol-stopped dimethylsilicone fluid and 3% polymethylhydrogen crosslinker.

### Sample B

3422 parts by weight of cyclic tetramer, 0.3 parts by weight KOH, and 146 parts by weight of a very-low-viscosity silanol-stopped linear dimethyl fluid containing about 8 weight % water as chainstopper were placed into a flask. This mixture formed a viscous polymer after 40 minutes at 153 °C. Neutralization was accomplished by addition of 0.54 parts by weight tris(2-chloroethyl)phosphite and stirring at 150 °C for two hours. Light ends were removed by stripping to yield 3040 parts by weight of silanol fluid to which 101 parts by weight methylhydrogen crosslinker were added. The filtered product (Sample B) was a clear viscous mixture, 5250 mPa.s in viscosity.

Sample C

A control was prepared by mixing 3.3 parts of methylhydrogen fluid with 100 parts of a silanol-stopped linear dimethyl fluid prepared by KOH equilibration and phosphoric acid neutralization (similar to examples 1 and 2 except that a molar equivalent amount of $H_3PO_4$ was substituted for tris(2-chloroethyl)phosphite.

The performance of the 3 samples described above was compared to the performance of commercial silanol composition (General Electric Co.) prepared by acid-catalyzed equilibratic of cyclic tetramer and water (Sample D below). Shelf stability was measured by monitoring the viscosity of the compositions as a function of time as they were stored at room temperature (25° C). Results obtained are presented below:

| Composition | Initial Viscosity, mPa.s | 1 Month mPa.s | 2 Month mPa.s | 4 Month mPa.s | 6 Month mPa.s |
|---|---|---|---|---|---|
| A | 2325 | 2290 | 2280 | 2360 | 2332 |
| B | 5250 | 4900 | 5300 | 5300 | 5300 |
| C | 3100 | >100,000 | gel | — | — |
| D | 3800 | 3880 | 3950 | 4300 | 4700 |

These 4 samples were tested for release performance in the same manner as Example 1 of EP-B1-108 208, except that the compositions were applied to the kraft paper out of a Lexane solvent with a No. 12 wire-wound rod and cured in a 150° C oven for 30 seconds. The following results were observed:

| Composition | Measured Release (parts by weight) |
|---|---|
| A | 150-170 |
| B | 145-170 |
| C | 150-175 |
| D | 130-165 |

It can be seen that the silanol-functional compositions neutralized according to the present invention (Samples A and B) have a longer shelf-life than conventionally-neutralized silanol polymethylhydrogensiloxane compositions.

**Claims**

1. A process for making a one-component solventless release composition by using a silanol-functional diorganopolysiloxane composition free of latent condensation catalyst having up to about 20% by weight SiOH groups and a viscosity of from 50 to 100,000 mPa.s at 25° C prepared by a base-catalyzed equilibration of cyclic polysiloxane monomers and water, said base being neutralized by the addition of tris(2-chloroethyl)-phosphite.

2. The process as defined in Claim 1, wherein said base is KOH and said cyclic polysiloxane monomers are primarily octamethylcyclotetrasiloxane.

**Revendications**

1. Procédé de fabrication d'une composition pelable sans solvant à un composant en utilisant une composition de polydiorganosiloxane à fonction silanol dépourvue de catalyseur de condensation latente pouvant contenir jusqu'à environ 20% en poids de groupes SiOH et présentant une viscosité comprise entre 50 et 100 000 mPa.s à 25° C préparée par une mise en équilibre catalysée par une base de monomères de polysiloxane cyclique et d'eau, la base étant neutralisée par addition de

phosphite de tris(chloro-2 éthyle).

2. Procédé selon la revendication 1, dans lequel la base est KOH et les monomères de polysiloxane cyclique sont principalement constitués par de l'octaméthylcyclotétrasiloxane.

**Patentansprüche**

1. Verfahren zum Herstellen einer lösungsmittelfreien Einkomponenten-Trennmittel-Zusammensetzung unter Verwendung einer silanolfunktionellen Diorganopolysiloxan-Zusammensetzung, die frei ist von einem latenten Kondensationskatalysator, bis zu etwa 20 Gew.-% SiOH-Gruppen und eine Viskosität von 50 bis 100 000 mPa.s bei 25 °C hat, hergestellt durch eine basenkatalysierte Äquilibrierung zyklischer Polysiloxanmonomerer und Wasser, wobei die Base durch die Zugabe von Tris (2-chlorethyl)phosphit neutralisiert ist.

2. Verfahren nach Anspruch 1, worin die Base KOH ist und die zyklischen Polysiloxanmonomere hauptsächlich Octamethylcyclotetrasiloxan sind.